# EUROPEAN PATENT APPLICATION

(11) **EP 3 885 012 A1**
(43) Date of publication of application: **29.09.2021**
(21) Application number: 19888157.5
(22) Date of filing: 15.11.2019
(51) Int. Cl.: A63D 15/20, A63F 13/45, A63F 13/35, A63F 13/327, H04M 1/725, A63D 15/00, A63B 71/06

(54) **BILLIARD HALL AUXILIARY SYSTEM AND SERVER THEREOF**

(30) Priority: 23.11.2018 KR 20180146098; 28.12.2018 KR 20180171697
(71) Applicant: Kim, Hyun Chul, Bucheon-si, Gyeonggi-do 14790 (KR)
(72) Inventor: Kim, Hyun Chul, Bucheon-si, Gyeonggi-do 14790 (KR)
(74) Representative: Brevalex
(86) International application number: PCT/KR2019/015672
(87) International publication number: WO 2020/105973

(57) **Abstract**

The present specification discloses an auxiliary system capable of checking billiard game information on a smartphone and an arrangement of billiard balls checking system constituting a part of the auxiliary system, the auxiliary system using: a login server of a smartphone user; a terminal connection server for connecting two or more smartphones via a wired or wireless communication network; a terminal system for setting a role of a device in the smartphone; and a user information server for managing basic information, game records, etc., of the user's billiards

## Description

### [Technical Field]

The disclosure discloses a billiard hall auxiliary system and a server for performing a billiard game, managing a record of the billiard game, and re-checking the performed billiard game.

### [Background Art]

Billiards is a type of sport which is played on a rectangular billiard table by a predetermined number of players, one by one, and scores a point by striking their cue ball and allowing it to contact a target ball and is terminated when predetermined points are reached.

Despite its long history, billiards is losing popularity due to the Internet and PC games. However, ongoing efforts are recently underway to spread billiards via billiard TV channels and various competitions. Billiards is escaping from its negative image as billiard halls are designated as non-smoking areas and is being perceived as clean and high-class sports.

Recent billiard halls adopt a neat interior and a digital score board, not abacus-style ones, and provide convenience to fit for the digital age.

There are touchscreen-type digital score boards on the market. However, such digital boards are expensive, so many billiard owners are reluctant to install digital boards in the entire hall.

Without a digital score board, it is not easy to record and calculate scores while playing games.

If cameras are installed in the billiard hall, games being played may be easily recorded, managed, and checked. However, installation of cameras incurs additional costs to the owners and, in many cases, billiard hall come equipped with digital score boards, but not cameras.

Scores won by a user playing in any one billiard hall are available only in the billiard hall, but not available for other billiard halls or competitions. Thus, it is difficult to obtain objective information from which the user's precise score may be known.

More and more users enjoy billiards and they try to raise their skills in various manners. One method is to practice on the arrangement of billiard balls for failed games.

However, it is difficult or impossible to remember all the arrangements of the billiard balls during game.

A player may strike billiard balls along various routes depending on the arrangement of the billiard balls and, to enhance his skills, requires a master. With a master, the player would learn from him in a limited space. In such a case, learning would be limited to the master's knowledge or techniques. Without such a master, the player ends up learning on his own by relying on various materials or data.

[Patent Document 1]
Korea Patent Application Publication No. 2017-0031006 (published on October 20, 2017)

### [Detailed Description of the Invention]

### [Technical Problem]

The present invention has been conceived to address the foregoing issues, and aims to provide a billiard game progress and record management system that connects club members' smartphones and allows them to easily play billiards using the Internet.

Another object of the present invention is to provide a billiard game progress and record management system that connects club members' smartphones and allows them to easily play billiards using the Internet without posing additional expense burdens for installation to the billiard hall owner.

Another object of the present invention is to provide a billiard ball arrangement identification system and method using the Internet, which stores the arrangement of billiard balls during game, as data, and allows users to check and practice the arrangement of billiard balls that he may not remember.

Another object of the present invention is to provide a billiard ball arrangement identification system and method using the Internet, which yields statistics for arrangements of billiard balls for which users failed to score and allow them to intensively practice them.

Another object of the present invention is to provide a billiard ball arrangement identification system and method using the Internet, which makes public to an unspecified number of people online how to strike billiard balls based on the arrangement of billiard balls shown during game and allow them to practice and learn skills and techniques regarding the arrangement of billiard balls.

To achieve the foregoing or other unmentioned objectives, embodiments of the present invention are available.

### [Technical Solution]

A billiard hall auxiliary system may identify billiard game information via a terminal and record and identify the billiard game via the terminal. The billiard hall auxiliary system includes a terminal connection server, a user information server, and a terminal system.

The terminal connection server identifies whether two or more terminals are in the same billiard hall, group them, transmits this information to a terminal system, and allows them to connect together via a wired/wireless communication network.

The user information server may store data regarding a game while the two or more terminals are connected together to play the game.

The terminal system may expose information regarding game progress and a device role in the terminal and transmit the information to the user information server.

If the terminal is connected to the terminal connection server via Wi-Fi, and matches a specific billiard hall information value, the terminal connection server classifies user information corresponding to a wait list of the specific billiard hall and transmits to a user terminal of the specific billiard hall (1), or activates location information for the user terminal, sets a radius of a location of the terminal, and then identifies whether billiard hall information values match, and the thermal insulation structure classifies user information corresponding to the wait list of the specific billiard hall (2).

The terminal connection server may transmit to the user terminal of the specific billiard hall and expose information for two or more terminals in the wait list of the specific billiard hall being used, to the terminal.

A specific terminal may select an ID of another party's terminal among the two or more terminals in the wait list of the terminal connection server and then connect another terminal via performing game, and if the game proceeds, a room for performing the game may be generated.

The terminal connection server may divide the terminal information via the wired/wireless communication network and the data received from the user information server into a wait list terminal or a game progress terminal and transmit the data to the terminal system.

According to another embodiment, a server receives an image captured for an entire billiard table while playing game from a terminal and provides users with a diagram image in which placements of billiard halls are sequentially output. The server includes a motion detection unit, a billiard table coordinate output unit, a billiard ball position coordinate output unit, and a diagram output unit.

The motion detection unit may detect motion by identifying colors of billiard balls from the entire billiard table image received from the terminal and, if no motion is detected, store a still screen of the image, as a still image, and output the still image and billiard hall color information.

The billiard table coordinate output unit may generate coordinates of the billiard table based on points of the entire billiard table and output the coordinates in the still image received from the motion detection unit.

The billiard ball position coordinate output unit may convert current positions of the billiard balls per color into coordinates, using the still image and the billiard ball color information received from the motion detection unit, with respect to the coordinates of the billiard table received from the billiard table coordinate output unit, and output the billiard ball position coordinates.

The diagram output unit may generate a diagram image shrunken in the same ratio as an actual billiard table, store the billiard table coordinates received from the billiard table coordinate storage unit (output unit) in the diagram image, and store and output the billiard ball position coordinates received from the billiard ball position coordinate output unit to fit for coordinates of the diagram image.

After a billiard game is finished in which a score is won by striking the billiard balls in the billiard hall, the server may provide users with the diagram image in which the placements of the billiard balls are sequentially output.

According to another embodiment, a billiard ball arrangement identification system provides users with a diagram image in which placements of billiard balls are sequentially output.

The billiard ball arrangement identification system includes a server receiving an image captured for an entire billiard table while playing game from a terminal and providing users with a diagram image in which placements of billiard halls are sequentially output.

The terminal includes an input unit inputting basic information before a user starts a billiard game, an image storage unit storing an image captured for an entire billiard table by a camera and transmitting the image to a server via Internet communication, and a display outputting the diagram image in which the placements of the billiard balls are sequentially output, received from the server.

The server includes the above-described motion detection unit, billiard table coordinate output unit, billiard ball position coordinate output unit, and diagram output unit.

After a billiard game is finished in which a score is won by striking the billiard balls in the billiard hall, the system may provide terminals with the diagram image in which the placements of the billiard balls are sequentially output.

### [Advantageous Effects]

According to the present invention, the billiard hall auxiliary system and server may connect club members' smartphones to display their scores and information necessary for performing game, instead of a digital score board which is expensive.

Further, according to the present invention, the billiard hall auxiliary system and server allow the user to sequentially identify the placements of the billiard balls during game and to easily reconstruct and practice the arrangement of billiard balls for which he failed to score.

### [Brief Description of Drawings]

FIG. 1 is a view illustrating an entire configuration of a billiard game progress and record management system using a smartphone app according to embodiment 1;
FIG. 2 is a block diagram illustrating a system method regarding a login method of embodiment 1;
FIG. 3 is a block diagram illustrating a system method regarding a user information server of embodiment 1;
FIG. 4 is a block diagram illustrating a system method regarding a terminal connection server of embodiment 1;
FIG. 5 is a block diagram illustrating a terminal connection server wait list regarding a terminal connection server of embodiment 1;
FIG. 6 is a view illustrating an example of a terminal user interface (UI), according to context, of a terminal mode of embodiment 1;
FIG. 7 is a view illustrating a configuration of a billiard ball arrangement identification system using the Internet according to embodiment 2;
FIG. 8 is a block diagram illustrating a billiard ball arrangement identification system method using the Internet according to embodiment 2;
FIG. 9 is a flowchart illustrating operations by a billiard table coordinate storage unit according to embodiment 2;
FIG. 10 is a view illustrating examples of a virtual line between points and coordinates in a billiard table coordinate storage unit according to embodiment 2;
FIG. 11 is a view illustrating an example screen in which coordinates are set using an actual billiard table camera;
FIG. 12 is a flowchart illustrating operations by a diagram output unit according to embodiment 2; and
FIG. 13 is a view illustrating an example diagram image finally generated from a diagram output unit according to embodiment 2.

### [Mode for Carrying out the Invention]

Embodiments of the present invention are now described with reference to the accompanying drawings in such a detailed manner as to be easily practiced by one of ordinary skill in the art. Well-known art is not described in detail.

### Embodiment 1: Billiard Game Progress and Record Management System

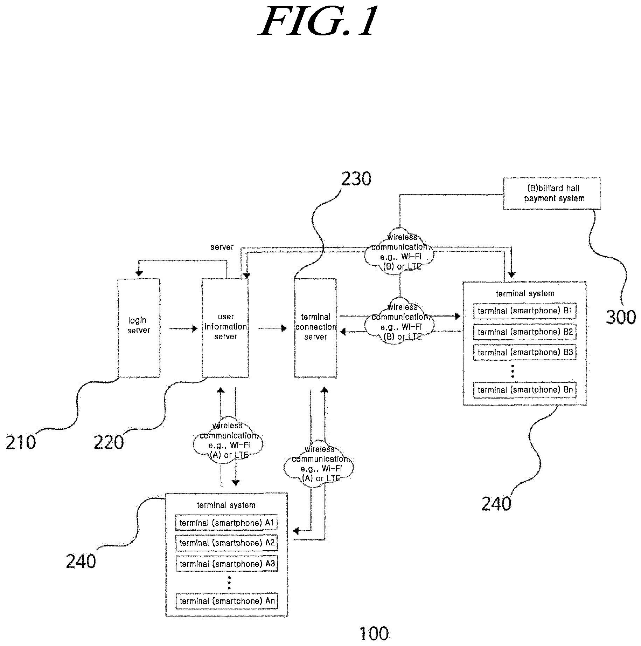

FIG. 1 is a view schematically illustrating a configuration of a billiard game progress and record management system using a smartphone app according to embodiment 1.

According to embodiment 1, an auxiliary system 100 may display a game score and game information on a smartphone when a billiard game is played in an offline (brick-and-mortar) billiard hall to thereby smoothly perform the billiard game and identify the game record after the game is terminated.

Specifically, the auxiliary system 100 according to embodiment 1 provides a billiard game progress and record management system to allow any players to easily manage billiard game progress and record on the Internet if the players have two or more smartphones, targeting people who are used to digital devices, instead of conventional manual, abacus-style score boards in the billiard hall.

To that end, the billiard game progress and record management system 100 using a smartphone app includes a login server 210 to identify a procedure for users to use the app, a terminal connection server 230 capable of recognizing the users in a billiard hall by smartphone communication between the users, a user information server 220 for storing and managing, e.g., the users' basic information and billiard-related information, and game records, and a terminal system 240 for displaying information received from a server on a smartphone and communicating game progress information between terminals, when two or more club members subscribing to a service and having installed the app on their smartphones play the billiard game.

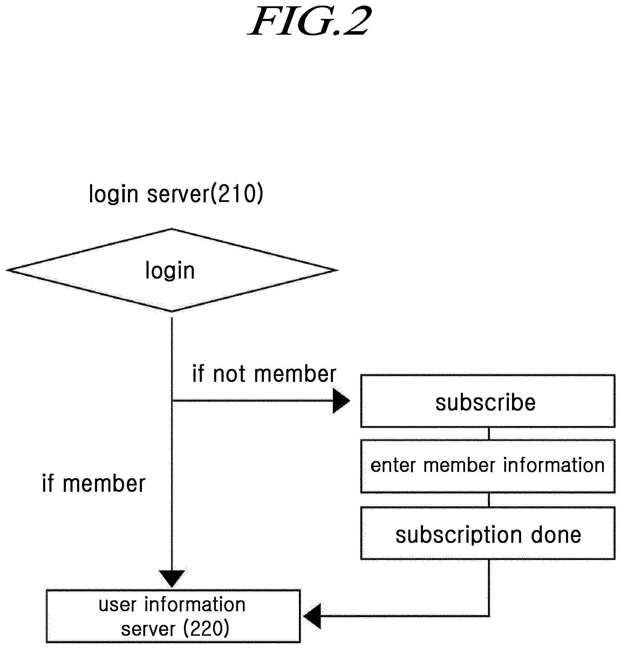

FIG. 2 is a view schematically illustrating a system configuration regarding the login server 210 of embodiment 1.

Referring to FIG. 2, the login server 210 transmits data to allow a user to do a search as to whether matching user information is in the user information server via login.

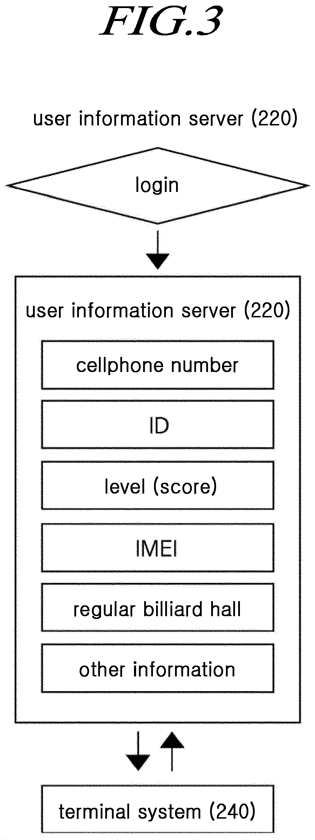

FIG. 3 is a view schematically illustrating a system configuration regarding the user information server 220 of embodiment 1.

Referring to FIG. 3, the user information server 220 stores unique information for the user who has complete a membership procedure, i.e., cellphone number, ID, level, information about a regular billiard hall, and terminal information, search for the information for the user who has logged in to the login server 210, and transmits matching information to the terminal system 240.

The user information server 220 checks whether a value of the information about the regular billiard is registered and, if registered, transmits data of the user information to the terminal connection server 230. In this case, if the user's level and information about the regular billiard hall are not registered, the user information server transmits data to the terminal system 240 to allow them to be registered.

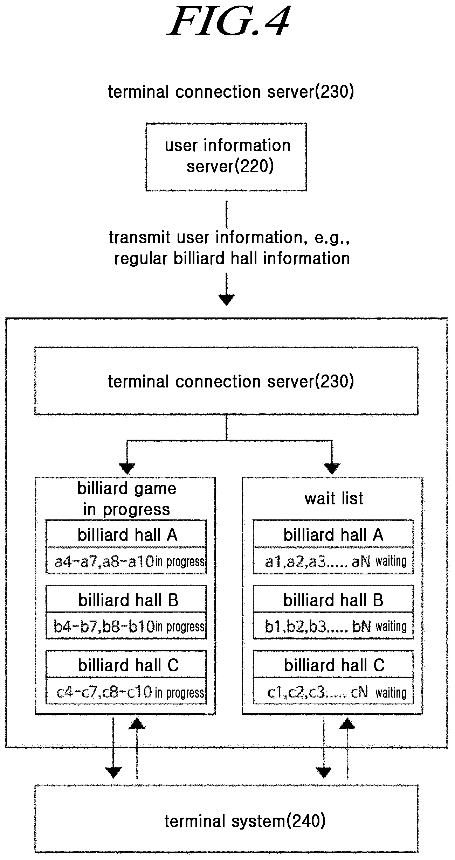

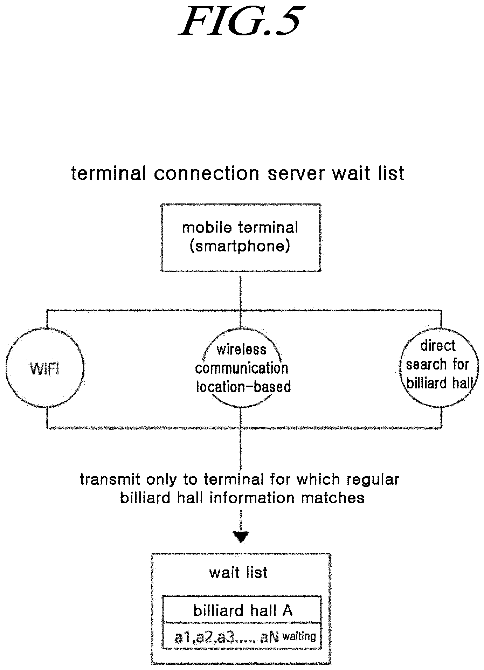

FIG. 4 is a view schematically illustrating a system configuration regarding the terminal connection server 230 of embodiment 1. FIG. 5 is a view schematically illustrating a system configuration of a terminal connection server wait list among systems regarding the terminal connection server 230 of embodiment 1.

Referring to FIGS. 4 and 5, the terminal connection server 230 may distinguish billiard hall information values previously input, add the value of the information for the regular billiard hall as a group of the previously input billiard hall information, register terminal information in a wait list per group, and transmit the information to the terminal system 240 to be identified on the smartphone.

The information for the terminal that is rendered to perform a game via continuous communication with the terminal system 240 is moved from the wait list to a game progress list, and information for the terminal which has ended game is received back to the wait list.

In this case, if the value of the regular billiard hall is A, the presence of the terminal in the billiard hall A may be recognized by three methods as follows.

First, if the terminal is connected to the server via the Wi-Fi of the billiard hall A and matches the value of the information for the regular billiard hall, the terminal connection server 230 classifies the user information corresponding to the wait list of billiard hall A and transmits users of billiard hall A to the terminal system 240.

In the method of connecting via Wi-Fi, since the terminal is connected via the Wi-Fi in the billiard hall, the API is connected in a system of a billiard hall payment system 300 in the same billiard hall to transmit data regarding the start and end times of game to the billiard hall payment system 300 so that a time check and payment may be performed.

Second, the location information for the user terminal is activated, and the radius of the terminal location is set to, e.g., 50m, and then, it is identified whether the value of the information for the regular billiard hall matches, the terminal connection server 230 classifies the user information corresponding to the wait list of the billiard hall A, and transmits it to the terminal system 240 of the users of the billiard hall A.

Third, if the user searches the terminal system 240 for a billiard hall registered in the system via a user interface (UI), and registers the found billiard hall as a regular billiard hall, the terminal connection server 230 classifies the user information in the wait list of the billiard hall A and transmits it to the terminal system 240 of the users of the billiard hall A.

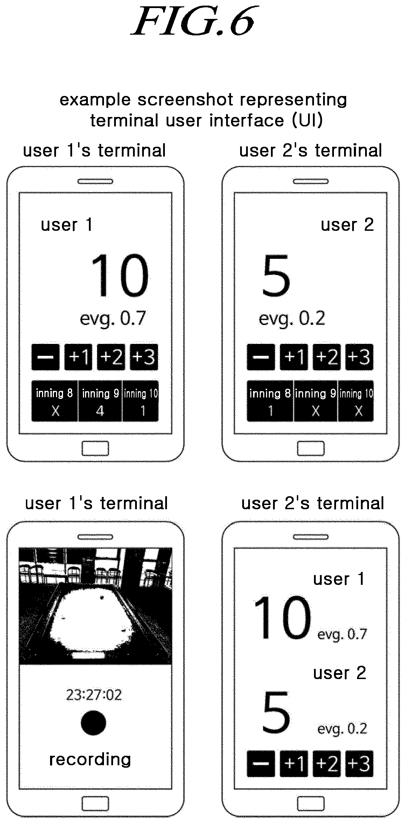

FIG. 6 is a view illustrating an example screen representing a terminal UI for a terminal mode, according to context.

Referring to FIG. 6, the terminal system 240 stores the information for the user himself, received from the user information server, in the terminal system 240 and expose and arrange the various pieces of received information to be identified by the user to fit the terminal user interface (UI).

The terminal system 240 receives information for various terminals in the wait list of the regular billiard hall from the terminal connection server 230 and exposes the information to be identified by the user to fit the terminal UI.

In this case, the terminal system 240 connects terminals among the waiting terminals of the terminal connection server 230, via proceeding with game after two or more users who have agreed on each other select the other party's ID of the terminal system 240 and, if the game proceeds, generate a room in which the game proceeds. As described above, the terminal connection server 230 transmits the information to allow the terminal information for the two users to move from the wait list to the game progress list to the terminal connection server 230, and data is transmitted to allow the users of two or more terminals to store information regarding the game progress in the user information server 220.

Before starting the billiard game, a UI may be displayed for the user to select whether to use one terminal in a camera mode or to use all the terminals in a score mode and, when the camera mode is used, it may be selected whether to use one of the terminals or to connect to a camera installed in the billiard hall, if any. In this case, it may be selected only when a camera installed in the billiard hall is connected to Wi-Fi so that the camera and the terminal may be connected to each other. The method in which the camera connects to the smartphone terminal using Wi-Fi should assume that the camera is of a model, such as an IP camera or CCTV, which is connectible to the smartphone, which is well known and a description thereof is thus omitted.

When the game proceeds, the terminal user interface (UI) may be displayed differently when one of the terminals is in the camera mode and when all of the terminals are in the score mode.

While the game proceeds, the user's inning information, score won for the inning, video information and other information necessary for the game are transferred in real-time to a database for the user who is playing the game, in the user information server 220 and, if the game ends, the final inning and won score, and average score are calculated and finally transmitted and stored, and then, a terminal user interface (UI) is displayed on the terminal system 240 to be identified by the user.

The terminal system 240 which has ended the game transmits data indicating that the game has ended to the terminal connection server 230, and the user information is transmitted to the wait list of regular billiard hall information as described above in connection with the terminal connection server 230, and is also transmitted to the terminal system 240 so that information for the terminals in standby mode in the billiard hall may be identified on the smartphone.

Embodiment 1 described above regards a system that connects club members' smartphones and displays their score and information necessary to perform game, instead of a digital score board which is expensive and provides the following effects.

First, the billiard hall owner may be avoided from the need for investing more than necessary.

Second, users, e.g., club members, may easily perform and record games even without a digital score board which is needed for recording.

Third, users may record and check videos with their own smartphone, without the need for a camera as an additional element.

Fourth, although users register and play in their regular billiard halls, their scores may be rendered available via integrated login system so that the users may identify their scores in competitions or other billiard halls.

Fifth, billiards may be promoted via communication between users.

A billiard ball arrangement identification system and method for identifying an arrangement of billiard balls in a billiard game performed in embodiment 1 described above are described below according to embodiment 2. The billiard ball arrangement identification system and method according to embodiment 2 may constitute part of the auxiliary system described above in connection with embodiment 1.

### Embodiment 2: Billiard ball arrangement identification system and method

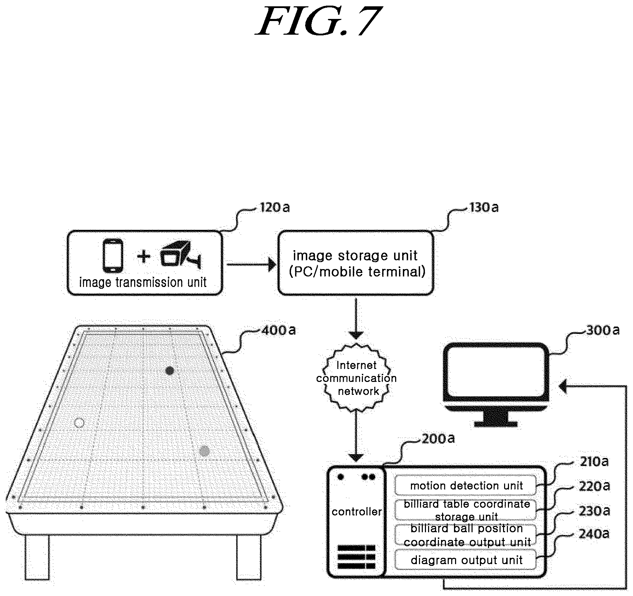

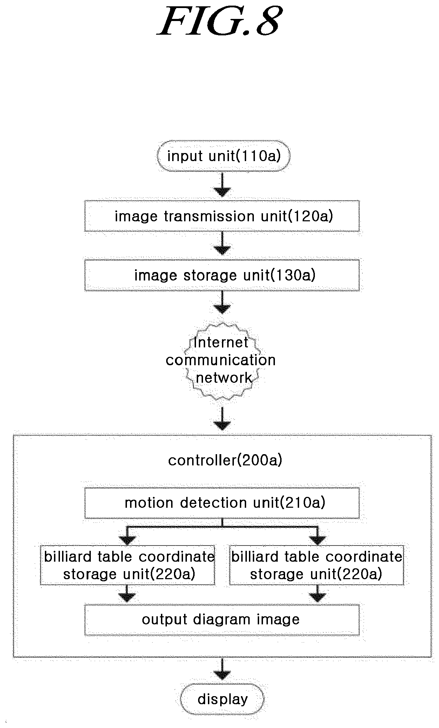

FIG. 7 is a view illustrating a configuration of a billiard ball arrangement identification system using the Internet according to embodiment 2. FIG. 8 is a block diagram illustrating a billiard ball arrangement identification system method using the Internet according to embodiment 2.

Referring to FIGS. 7 and 8, a billiard ball arrangement identification system 100a according to embodiment 2 regards an auxiliary system capable of double-checking a billiard game and may sequentially store placements of billiard balls, as data, as a three-cushion billiard game proceeds, provide the data to users via mobile or PCs over the Internet while suggesting an effective practicing method via communication, thereby aiding them in leveling up and allowing a digital-savvy generation to have more interest and easy access.

As shown in FIGS. 7 and 8, the billiard ball arrangement identification system 100 according to embodiment 2 includes an input unit 110a for inputting basic information before a user starts a billiard game and a controller 200a for providing a billiard ball arrangement identification system using the Internet through an image transmission unit 120a, an image storage unit 130a, a motion detection unit 210a, a billiard table coordinate storage unit 220a, a billiard ball position coordinate output unit 230a, a diagram output unit 240a, and a display 300a.

The image transmission unit 120a refers to a camera, i.e., a digital camera, a web camera, a CCTV, or a mobile capturing device, which may capture or record a billiard table 400a and transmit it to the image storage unit 130a. The image transmission unit 120a is operated in synchronization with a start command and an end command from a game time measurement device (the display 300a or a score display device 300a or other devices) installed in the billiard hall and transmits the captured image to the image storage unit 130a.

The image storage unit 130a receives image information from the image transmission unit 120a, stores the image information, and transmits it to the motion detection unit 210a via Internet communication.

The motion detection unit 210a identifies the colors of the billiard balls from the image received from the image storage unit 130a and detects motion of the billiard ball of each color. If no motion is identified, the frame of the image is separately stored as a still image, and the still image is transmitted to the billiard table coordinate storage unit 220a, and billiard ball color information, along with the still image, is transmitted to the billiard ball position coordinate output unit 230a.

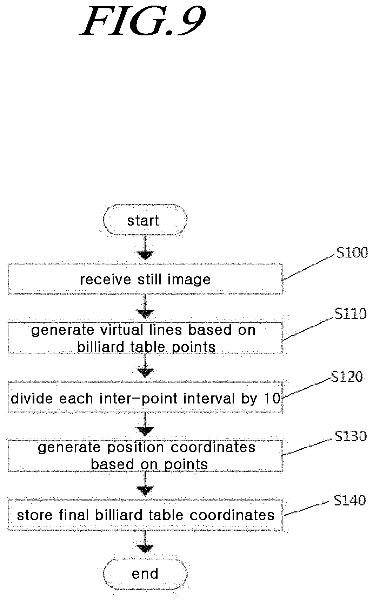

FIG. 9 is a flowchart illustrating operations by a billiard table coordinate storage unit according to embodiment 2.

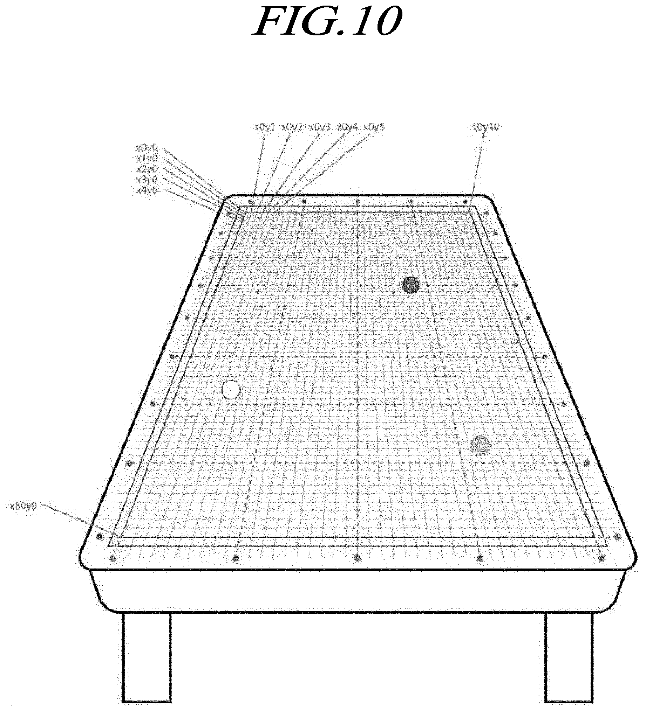

FIG. 10 is a view illustrating examples of a virtual line between points and coordinates in a billiard table coordinate storage unit according to embodiment 2.

Referring to FIGS. 9 and 10, operations of the billiard table coordinate storage unit 220a are described below in greater detail.

Referring to FIGS. 9 and 10, the billiard table coordinate storage unit 220a receives (S100) and stores the still image received from the motion detection unit 210a and generates virtual horizontal and vertical straight lines connecting points as shown in FIG. 10. The billiard table coordinate storage unit 220a divides each inter-point interval by 10 or more (S120) and generate new virtual lines, selects an edge point and generates coordinates (S130) based on the point, and finally stores the billiard table coordinates (S140).

A method for obtaining the virtual lines between the points is to recognize white or black points on the frame of the billiard table, drawing horizontal and vertical straight lines between the points and their respective opposite points, thereby generating coordinates.

The coordinates of the billiard table coordinate storage unit 220a may be generated by the following method or by other methods.

**[Table 1]**

| *Example of generating coordinates for a vertical billiard table* |
|---|
| x0y0 , x0y1, x0y2, x0y3, x0y4, x0y5 ...... x0y40 |
| x1y0 , x1y1, x1y2, x1y3, x1y4, x1y5 ...... x1y40* |
| x2y0 , x2y1, x2y2, x2y3, x2y4, x2y5 ...... x2y40 |
| x3y0 , x3y1, x3y2, x3y3, x3y4, x3y5 ...... x3y40 |
| x4y0 , x4y1, x4y2, x4y3, x4y4, x4y5 ...... x4y40 |
| x5y0 , x5y1, x5y2, x5y3, x5y4, x5y5 ...... x5y40 |
| x6y0 , x6y1, x6y2, x6y3, x6y4, x6y5 ...... x6y40 : , : , : , : , : , : : : x80y0, x80y1, x80y2, x80y3, x80y4, x80y5 ... X80y40 |

In this case, in calculating the coordinates of the billiard table, if information indicating the camera is fixed is identified, the system may be restarted, and then generate coordinates once or multiple times, and store them.

The coordinates generated and stored by the billiard table coordinate storage unit 220a are transmitted to the billiard ball position coordinate output unit 230a and the diagram output unit 240a.

The billiard ball position coordinate output unit 230a receives the still image and per-billiard ball color information from the motion detection unit 210a and the billiard table coordinate information from the billiard table coordinate storage unit 220a and calculates coordinates per billiard ball color.

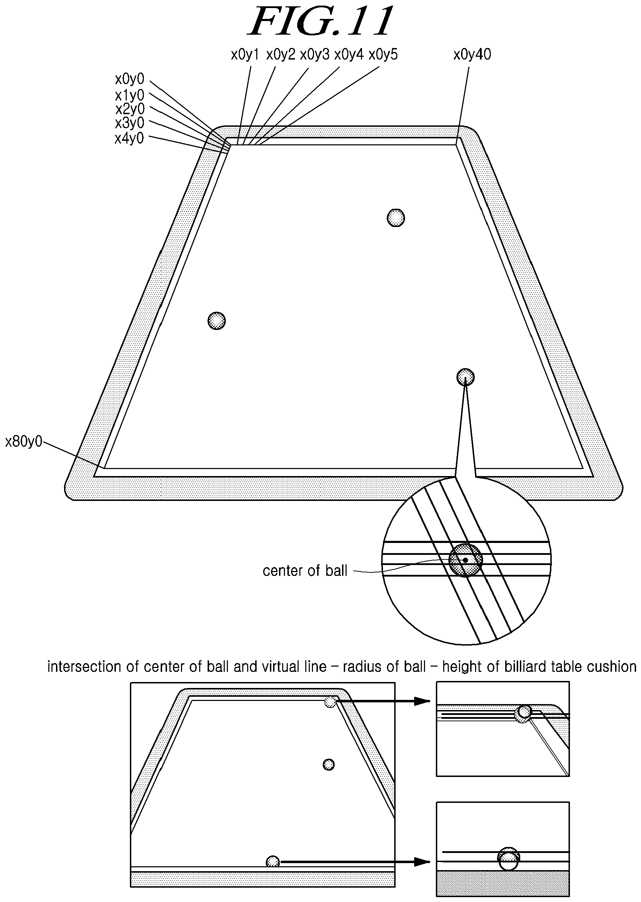

A method for calculating coordinates for an actual billiard table is described below in greater detail with reference to FIG. 11. FIG. 11 is a view illustrating an example screen in which coordinates are set using an actual billiard table camera.

For the coordinates of the center point of each billiard ball, the coordinates are set based on the point where the center of the billiard ball meets a virtual line in the image captured by a camera installed in a diagonal direction as shown in FIG. 11, and since the point is positioned on the cushion of the billiard table, (height of billiard table cushion + radius of billiard ball) is subtracted, and the coordinates are stored.

An equation for calculating the coordinates is as follows.

**[Table 2]**

| *Example coordinates* |
|---|
| X coordinate = (intersection of center billiard ball and virtual line) - radius of billiard ball - height of billiard table cushion Y coordinate = (intersection of center of billiard ball and virtual line) - radius of billiard ball - height of billiard table cushion |

In this case, for the coordinates of the ball contacting the billiard table cushion, the center of the ball may not be used as a reference. Thus, in calculation of the coordinates, the radius of the billiard ball is subtracted from the coordinates if the ball is positioned on the bottom or left cushion and is added to the coordinates if the ball is positioned on the top or right cushion.

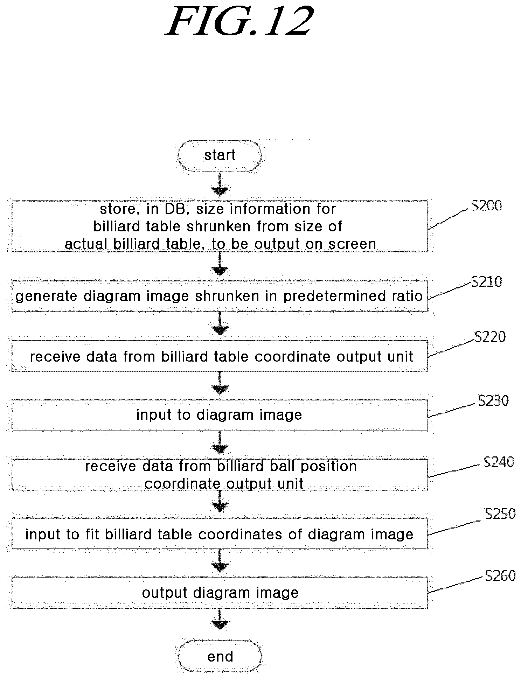

Operations of the diagram output unit 240a are described below in further detail with reference to FIG. 12. FIG. 12 is a flowchart illustrating operations by a diagram output unit according to embodiment 2.

Referring to FIG. 12, in an image captured by a camera installed on the ceiling over the center of the billiard table, the coordinates of the left side and top of the ball shown are stored and transmitted to the diagram output unit 240a.

The diagram output unit 240a stores, in a database, data (billiard table size information) for a billiard table shrunken in a predetermined ratio from the size of an actual billiard table depending on a display on which it is to be displayed (S200) and generates a diagram image shrunken in a predetermined ratio (S210).

The diagram output unit 240a receives data (coordinates) from the billiard table coordinate storage unit 220a (S220), input the data to the diagram image (S230), receives data (coordinates of billiard balls) from the billiard ball position coordinate output unit 230a (S240), inputs it to fit the coordinates of the billiard table coordinates previously input (S250), displays billiard balls and draws a diagram image, and transmits it to the display (S260).

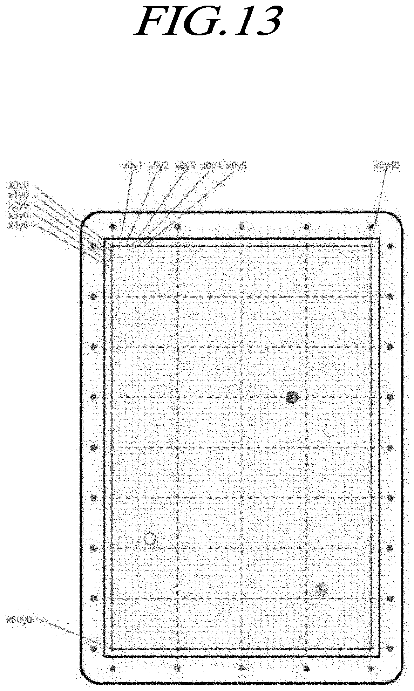

FIG. 13 is a view illustrating an example of a diagram image output from the diagram output unit 240a.

By the billiard ball identification system according to embodiment 2, first, the user may sequentially identify the placements of the billiard balls during game and may easily reconstruct and practice the arrangement of billiard balls for which he failed to score.

Second, the arrangement of billiard balls may be shared online by specific multiple people, which helps enhancing skills, off the limited offline practice.

Third, billiards may be promoted via communication between users.

In the above, the present invention has been described according to the accompanying drawings and the embodiments, but the present invention is not limited to the accompanying drawings and the disclosed embodiments. It will be understood by those skilled in the art that modifications may be made in accordance with the spirit of the present invention, and that such modifications and changes also fall within the scope of the present invention.

### CROSS-REFERENCE TO RELATED APPLICATION

This application claims priority, under 35 U.S.C. 119(a), to Korean Patent Application Nos. 10-2018-0146098, filed on November 23, 2018, and 10-2018-0171697, filed on December 28, 2018, in the Korean Intellectual Property Office, the disclosures of which are incorporated by reference herein in their entireties.

## Claims

1. A billiard hall auxiliary system identifying billiard game information via a terminal and recording and identifying the billiard game via the terminal, comprising:
a terminal connection server identifying whether two or more terminals are in the same billiard hall, group them, transmit this information to a terminal system, and allow them to connect together via a wired/wireless communication network;
a user information server storing data regarding a game while the two or more terminals are connected together to play the game; and
a terminal system exposing information regarding game progress and a device role in the terminal and transmitting the information to the user information server, wherein
if the terminal is connected to the terminal connection server via Wi-Fi, and matches a specific billiard hall information value, the terminal connection server classifies user information corresponding to a wait list of the specific billiard hall and transmits to a user terminal of the specific billiard hall (1), or activates location information for the user terminal, sets a radius of a location of the terminal, and then identifies whether billiard hall information values match, classifies user information corresponding to the wait list of the specific billiard hall, and transmits to the user terminal of the specific billiard hall (2), wherein the terminal connection server exposes information for two or more terminals in the wait list of the specific billiard hall being used, to the terminal, wherein a specific terminal selects an ID of another party's terminal among the two or more terminals in the wait list of the terminal connection server and then connects another terminal via performing game, and if the game proceeds, a room for performing the game is generated, and wherein the terminal connection server divides the terminal information via the wired/wireless communication network and the data received from the user information server into a wait list terminal or a game progress terminal and transmits the data to the terminal system.

2. The billiard hall auxiliary system of claim 1, wherein before starting the billiard game, a user interface (UI) is displayed for a user to select whether to use one of the terminals in a camera mode or to use all of the terminals in a score mode without using them as cameras, wherein when the camera mode is used, it is selected whether to use one of the terminals or, if a camera is installed in the specific billiard hall, connect to the camera, and wherein the camera is selected only when the camera installed in the specific billiard hall is connected to the Wi-Fi so that the camera and the terminal are connectible.

3. The billiard hall auxiliary system of claim 1, wherein the terminal system displays different UIs on the connected terminals but they interwork with each other to transmit the same game information to the user information server.

4. The billiard hall auxiliary system of claim 1, wherein the terminal system connected via the Wi-Fi transmits data regarding game start and end to a billiard hall payment system to record payment and game time.

5. A server receiving an image captured for an entire billiard table while playing game from a terminal and providing users with a diagram image in which placements of billiard halls are sequentially output, the server comprising:
a motion detection unit detecting motion by identifying colors of billiard balls from the entire billiard table image received from the terminal and, if no motion is detected, storing a still screen of the image, as a still image, and outputting the still image and billiard hall color information;
a billiard table coordinate output unit generating coordinates of the billiard table based on points of the entire billiard table and outputting the coordinates in the still image received from the motion detection unit;
a billiard ball position coordinate output unit converting current positions of the billiard balls per color into coordinates, using the still image and the billiard ball color information received from the motion detection unit, with respect to the coordinates of the billiard table received from the billiard table coordinate output unit, and outputting the billiard ball position coordinates; and
a diagram output unit generating a diagram image shrunken in the same ratio as an actual billiard table, storing the billiard table coordinates received from the billiard table coordinate storage unit (output unit) in the diagram image, and storing and outputting the billiard ball position coordinates received from the billiard ball position coordinate output unit to fit for coordinates of the diagram image,
wherein after a billiard game is finished in which a score is won by striking the billiard balls in the billiard hall, the diagram image in which the placements of the billiard balls are sequentially output is provided to users.

6. The server of claim 5, wherein the billiard table coordinate output unit generates the coordinates of the billiard table, stores in a database, and outputs the coordinates of the billiard table to the billiard ball position coordinate output unit or the diagram output unit.

7. The server of claim 5, wherein the diagram output unit stores the diagram image in which position coordinates of the billiard balls are marked, as a database of billiard ball arrangement, and outputs the billiard ball arrangement in order of game on a display to the user.

8. The server of claim 5, wherein the billiard table coordinate storage unit generates horizontal and vertical virtual straight lines connecting points on the still image received from the motion detection unit, divides each inter-point interval by 10 or more and draws and generates more virtual lines, selects an edge point, and generates and stores the coordinates of the billiard table with respect to the points of the entire billiard table.

9. The server of claim 8, wherein if the still image is an image captured in a diagonal direction, the billiard ball position coordinate output unit calculates the billiard ball position coordinates as a value obtained by subtracting a radius of the billiard ball and a height of a billiard ball cushion from an intersection of a center of the billiard ball and the virtual line.

10. The server of claim 9, wherein if the billiard ball contacts the billiard ball cushion, the billiard ball position coordinate output unit subtracts the radius of the billiard ball, for a bottom and left side, or adds the radius of the billiard ball, for a top and right side, from/to the calculated position coordinates of the billiard ball, depending on a position where the billiard ball contacts each side of the billiard table, and outputs the result as the position coordinates of the billiard ball.

11. The server of claim 8, wherein if the still image is an image captured from a ceiling, the billiard ball position coordinate output unit outputs coordinates of a left and top side of the billiard ball at an intersection of a center of the billiard ball and the virtual line, as the position coordinates of the billiard ball.

12. A billiard ball arrangement identification system providing users with a diagram image in which placements of billiard balls are sequentially output, comprising:
a terminal including an input unit inputting basic information before a user starts a billiard game, an image storage unit storing an image captured for an entire billiard table by a camera and transmitting the image to a server via Internet communication, and a display outputting the diagram image in which the placements of the billiard balls are sequentially output, received from the server; and
the server receiving an image captured for an entire billiard table while playing game from the terminal and providing users with a diagram image in which placements of billiard halls are sequentially output, the server comprising a motion detection unit detecting motion by identifying colors of billiard balls from the entire billiard table image received from the terminal and, if no motion is detected, storing a still screen of the image, as a still image, and outputting the still image and billiard hall color information, a billiard table coordinate output unit generating coordinates of the billiard table based on points of the entire billiard table and outputting the coordinates in the still image received from the motion detection unit, a billiard ball position coordinate output unit converting current positions of the billiard balls per color into coordinates, using the still image and the billiard ball color information received from the motion detection unit, with respect to the coordinates of the billiard table received from the billiard table coordinate output unit, and outputting the billiard ball position coordinates, and a diagram output unit generating a diagram image shrunken in the same ratio as an actual billiard table, storing the billiard table coordinates received from the billiard table coordinate storage unit (output unit) in the diagram image, and storing and outputting the billiard ball position coordinates received from the billiard ball position coordinate output unit to fit for coordinates of the diagram image,
wherein after a billiard game is finished in which a score is won by striking the billiard balls in the billiard hall, the diagram image in which the placements of the billiard balls are sequentially output is provided to the terminal.
